# FASCICULE DE BREVET EUROPEEN

(11) **EP 2 987 921 B1**
(45) Date de publication et mention de la délivrance du brevet: **09.05.2018**
(21) Numéro de dépôt: 15306155.1
(22) Date de dépôt: 13.07.2015
(51) Int. Cl.: E04B 1/16, E04B 2/86, E04B 1/76, E04C 2/04

(54) **MUR A COFFRAGE INTEGRE A RUPTURE THERMIQUE, PROCEDE DE CONSTRUCTION D'UN BATIMENT A PARTIR DUDIT MUR, ET BATIMENT OBTENU**
MAUER MIT THERMISCH GETRENNTER INTEGRIERTER SCHALUNG, BAUVERFAHREN EINES GEBÄUDES MIT EINER SOLCHEN MAUER UND SO ERHALTENES GEBÄUDE
INTEGRATED FORMWORK WALL WITH THERMAL BREAK, METHOD FOR CONSTRUCTING A BUILDING FROM SAID WALL, AND BUILDING OBTAINED

(30) Priorité: 21.08.2014 FR 1457916
(43) Date de publication de la demande: 24.02.2016
(73) Titulaire: Lesage Developpement S.A.S., 68200 Mulhouse (FR)
(72) Inventeur: SCHWARTZENTRUBER, Arnaud, 69740 GENAS (FR)
(74) Mandataire: Koelbel, Caroline

(56) Documents cités:
- DE-A1- 2 164 060
- DE-U1- 9 408 689
- FR-A1- 2 971 803
- US-A1- 2010 218 446

## Description

### Domaine technique :

La présente invention concerne un mur à coffrage intégré comportant une première paroi dite peau extérieure et une seconde paroi dite peau intérieure, ladite peau extérieure et ladite peau intérieure étant sensiblement parallèles et maintenues à distance l'une de l'autre par au moins une armature de liaison de préférence métallique, lesdites peaux extérieure et intérieure se faisant face par leur face intérieure, la distance entre lesdites peaux extérieure et intérieure délimitant un espace agencé pour recevoir un matériau de construction coulé sur le chantier, ledit mur comportant au moins une zone de jonction horizontale et/ou verticale avec au moins un élément de construction notamment une dalle ou un mur de refend, ledit mur à coffrage intégré comportant en outre des moyens d'isolation agencés pour créer une rupture thermique au moins au droit de ladite zone de jonction horizontale et/ou verticale.

La présente invention concerne également un procédé de construction d'un bâtiment obtenu par l'assemblage de murs porteurs, de dalles et/ou de murs de refend.

Enfin, la présente invention concerne un bâtiment obtenu par l'assemblage de murs porteurs, de dalles et/ou de murs de refend.

### Technique antérieure :

L'invention concerne le domaine de la construction de bâtiments, et plus spécifiquement de la construction de bâtiments à partir d'éléments préfabriqués en usines ou sur chantier, tels que des prémurs ou murs à coffrage intégré et/ou des prédalles, destinés à être acheminés sur le lieu de construction en vue notamment de réduire la durée du chantier.

Un mur à coffrage intégré, appelé aussi prémur, se présente usuellement sous la forme de deux parois appelées communément des peaux, sensiblement parallèles et maintenues à distance l'une de l'autre par des armatures de liaison ou distanceurs métalliques. La distance ménagée entre les deux peaux est destinée à recevoir un matériau pouvant être coulé sur chantier, tel que du béton. Une des extrémités du mur, et notamment l'extrémité correspondante de la peau intérieure, est destinée à recevoir notamment l'extrémité d'une dalle ou d'une prédalle. A cet effet, la peau extérieure dudit mur comporte traditionnellement une hauteur supérieure à la hauteur de la peau intérieure pour délimiter une zone de chaînage correspondant sensiblement à l'épaisseur de la dalle finie, à hauteur de laquelle on réalise la liaison mécanique entre le mur et la dalle lors de la coulée du béton. Cette configuration présente le désavantage de générer un pont thermique au niveau de la zone de jonction puisqu'elle est généralement exempte de matériaux isolants. Or, la règlementation thermique en vigueur impose de traiter ces déperditions d'énergie. Les constructeurs sont donc contraints de trouver des solutions d'isolation supprimant de tels ponts thermiques.

Dans l'art antérieur, on trouve des solutions d'isolation permettant la suppression des ponts thermiques qui ne donnent toutefois pas entière satisfaction pour les raisons exposées ci-après.

L'on connaît déjà par la publication FR 2 795 440 B1 un mur à coffrage intégré isolant dont les peaux extérieure et intérieure sont réalisées dans un matériau isolant constitué par un mélange hydraulique complexe. La fabrication d'un tel mur est par conséquent onéreuse du fait de la mise en oeuvre d'un procédé de fabrication plus compliqué. De plus, la résistance mécanique de la construction incorporant de tels murs préfabriqués est diminuée du fait de l'utilisation de peaux en matériaux isolants mécaniquement moins performants que le béton armé traditionnel.

L'on connaît également une autre solution existante de mur à coffrage intégré isolant dont la peau extérieure comporte sur toute sa face intérieure une plaque réalisée en un matériau isolant. Pour cette raison, les deux peaux sont connectées par des moyens de raccordement spécifiques réalisés en matières plastiques, résine, fibre de verre, acier inoxydable ou équivalent, comme notamment ceux décrits dans la publication FR 2912 165 A1. En effet, les raccordements traditionnels réalisés en acier, qui maintiennent entre elles et à distance les deux peaux dudit mur et permettent la reprise de charge, sont sensibles à la corrosion. Or, l'utilisation d'armatures de liaison traditionnelles est rendue impossible car la plaque isolante ne protège pas de la corrosion, contrairement au béton. De plus, ces armatures métalliques créeraient des ponts thermiques dégradant l'efficacité de l'isolant. On peut noter que l'utilisation de moyens de raccordement spécifiques présente l'inconvénient de complexifier le procédé de fabrication puisqu'une étape supplémentaire est ajoutée. En outre, la plaque isolante recouvre la totalité de la face intérieure de la peau extérieure. Or, comme expliqué précédemment, l'utilisation de matériaux isolants sur l'intégralité de la hauteur dudit mur augmente sensiblement son coût de fabrication.

On connaît également de la publication DE 21 34 533 A1 un mur à coffrage intégré isolé, dont la couche isolante est disposée sur toute la hauteur de la face intérieure de la peau extérieure. Elle permet de former une isolation totale du mur, ce qui comme dans la publication citée précédemment, augmente le coût de fabrication du mur préfabriqué.

On connaît également de la publication FR 3 004 200 A1 de la demanderesse, un mur à coffrage intégré isolé partiellement. Ce mur peut comporter une zone de jonction horizontale avec une dalle et/ou une zone de jonction verticale avec un mur de refend. Des moyens d'isolation sont prévus sur la face intérieure de la peau extérieure au niveau de chaque zone de jonction horizontale ou verticale. Ces moyens d'isolation forment une isolation partielle au niveau de ces zones de jonction. Cette solution permet d'obtenir une très forte réduction du pont thermique dans les zones de jonction. Toutefois, des inconvénients ont été relevés par la demanderesse qui a constaté que la tenue des moyens d'isolation, lors du coulage du mur à coffrage intégré à proprement parlé et lors du remplissage du béton entre les deux peaux, n'est pas suffisante. D'autre part, il a été observé que des problèmes d'étanchéité pouvaient survenir au niveau des joints provoquant une accumulation d'eau dans les moyens d'isolation et nécessitant de rendre les joints étanches ou de créer un dispositif permettant d'évacuer l'eau ce qui génère un surcout de fabrication. Enfin, la présence de moyens d'isolation dans les zones de jonction empêche de faire passer des armatures métalliques de liaison. Il en résulte une discontinuité mécanique et des contraintes techniques supplémentaires.

On connaît de la publication US 2010/0218446 A1 un mur formé à partir d'un élément d'un mur interne en béton coulé en place et d'un mur préfabriqué externe en béton qui sont accolés entre eux. L'élément de mur préfabriqué externe comporte un panneau en béton recouvert sur sa face intérieure d'une couche isolante. La zone de liaison entre le mur et une dalle est réalisée en béton coulé simultanément au mur interne. La zone de liaison s'étend en dessous du niveau de la dalle et est isolée sur sa face extérieure par une couche isolante dans le prolongement de l'élément de mur préfabriqué. Bien que ce mur permette une isolation de la zone de liaison entre le mur et la dalle, ce document ne concerne pas l'isolation d'un mur à coffrage intégré.

La publication DE 2 164 060 décrit un élément de façade comportant une succession de peaux intérieures et une succession de peaux extérieures, distantes l'une de l'autre et remplies d'un coeur en béton coulé sur le chantier. La face intérieure de chaque peau extérieure comporte un panneau isolant. Entre les peaux extérieures adjacentes sont disposés des joints d'étanchéité pour éviter que lors du coulage du coeur le béton ne s'écoule entre les peaux extérieures. Toutefois, ces joints d'étanchéité ne sont pas des moyens d'isolation et ne permettent pas de garantir l'isolation de la zone de jonction. En outre, ce document ne décrit pas la jonction d'une dalle et d'un mur.

La publication FR 2 971 803 A1 divulgue les caractéristiques du préambule de la revendication 1. Pour toutes ces raisons, les solutions actuelles ne sont pas satisfaisantes.

### Exposé de l'invention :

La présente invention vise à pallier ces inconvénients en proposant un mur à coffrage intégré préfabriqué permettant une très forte réduction du pont thermique au niveau des zones de jonction entre le mur et les autres éléments de construction, dans le but de répondre aux exigences thermiques en vigueur, tout en présentant une conception simple, solide et économique dudit mur ainsi qu'en préservant les propriétés mécaniques et structurelles dudit mur.

Dans ce but, l'invention concerne un mur à coffrage intégré du genre indiqué en préambule, ayant les caractéristiques de la revendication 1. De manière avantageuse, la peau extérieure présente une hauteur supérieure à la hauteur de la peau intérieure pour former une extrémité supérieure saillante agencée pour recevoir l'extrémité d'une dalle et délimitant ladite zone de jonction horizontale, et ladite extrémité supérieure saillante comporte des moyens d'isolation qui s'étendent sur une hauteur prédéterminée inférieure à la hauteur de ladite peau extérieure.

De manière préférentielle, l'extrémité inférieure de la peau extérieure comporte des moyens d'isolation qui s'étendent sur une hauteur prédéterminée inférieure à la hauteur de ladite peau extérieure.

De préférence, ladite peau intérieure comporte une réservation s'étendant longitudinalement dans une direction verticale agencée pour recevoir l'extrémité d'un mur de refend et délimitant une zone de jonction verticale, et la peau extérieure comporte sur sa face extérieure des moyens d'isolation qui s'étendent sur une longueur prédéterminée inférieure à la longueur de ladite peau extérieure.

De manière avantageuse, les moyens d'isolation de la zone de jonction verticale peuvent s'étendre sur toute la hauteur de la peau extérieure. Lesdits moyens d'isolation de la zone de jonction verticale peuvent s'étendre sur une partie sur la hauteur de la peau extérieure.

De préférence, lesdits moyens d'isolation de la zone de jonction horizontale peuvent s'étendre sur toute la longueur de la peau extérieure.

Avantageusement, lesdits moyens d'isolation peuvent être rapportés sur la face extérieure de ladite peau extérieure. Lesdits moyens d'isolation peuvent être intégrés au moins partiellement dans l'épaisseur de ladite peau extérieure.

De préférence, lesdits moyens d'isolation peuvent être intégrés totalement dans l'épaisseur de ladite peau extérieure et peuvent affleurer la face extérieure de la peau extérieure. L'épaisseur desdits moyens d'isolation peut constituer sensiblement un tiers de l'épaisseur de ladite peau extérieure.

De manière avantageuse, lesdits moyens d'isolation peuvent être constitués d'au moins une plaque de matériaux isolants choisis dans le groupe comprenant des matériaux en fibrociment, en composite ciment verre, en béton hautes et très hautes performances, en ciment allégé par des billes de polystyrène expansé, en fibres de bois et résine thermodurcissable, en perlite expansée additionnée de fibre et de liant, en polyester en résine et fibre de verre, en gypse et fibre, en silico-calcaire autoclavé incombustible.

De préférence, les moyens d'isolation sont liés à la face extérieure de la peau extérieure par l'intermédiaire de connecteurs.

La présente invention concerne également un procédé de construction d'un bâtiment du genre indiqué en préambule, caractérisé en ce que pour fabriquer au moins une partie desdits murs porteurs, l'on utilise des murs à coffrage intégré tels que définis ci-dessus.

La présente invention concerne également un bâtiment du genre indiqué en préambule, caractérisé en ce qu'au moins une partie desdits murs porteurs comporte des murs à coffrage intégré tels que définis ci-dessus.

### Description sommaire des dessins :

La présente invention et ses avantages apparaîtront mieux dans la description suivante de plusieurs modes de réalisation donnés à titre d'exemples non limitatifs, en référence aux dessins annexés, dans lesquels:
- la figure 1 est une vue en perspective d'un mur à coffrage intégré selon l'invention agencé pour recevoir une dalle,
- la figure 2 est une vue de coté en coupe d'une zone de jonction horizontale entre le mur de la figure 1 et une dalle,
- la figure 3 est une vue en perspective d'un mur à coffrage intégré agencé pour recevoir en outre un mur de refend selon une variante de l'invention, et
- la figure 4 est une vue de dessus en coupe de la zone de jonction verticale entre le mur à coffrage intégré de la figure 3 et le mur de refend.

### Illustrations de l'invention :

En référence aux figures, la présente invention concerne un mur à coffrage intégré 1, 1' qui sera dénommé dans la suite « mur ». Il est agencé pour recevoir au moins un élément de construction pouvant être une dalle D ou un mur de refend M, positionné au niveau d'une zone de jonction horizontale 5 dans le cas d'une dalle D ou au niveau d'une zone de jonction verticale 5' dans le cas d'un mur de refend M. Le mur à coffrage intégré 1 est préfabriqué, par exemple en usine.

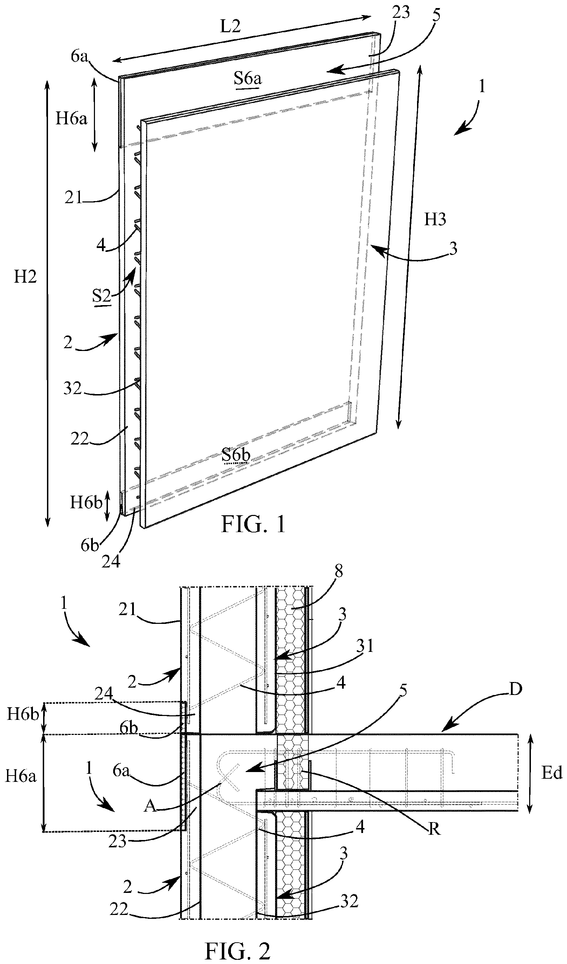

La figure 1 représente en perspective un mur à coffrage intégré 1 agencé pour recevoir une dalle D. Selon l'invention, le mur 1 comporte une première paroi dite peau extérieure 2 et une seconde paroi dite peau intérieure 3, par exemple, obtenues par coulage d'un matériau durcissable, tel que du béton. De préférence, les peaux 2 et 3 ont une forme sensiblement parallélépipédique. Celles-ci sont sensiblement parallèles et maintenues à distance l'une de l'autre par leur face intérieure 22, 32 au moyen d'armatures 4 qui permettent d'armer le béton. La distance ménagée entre les deux peaux 2, 3 permet de délimiter un espace dans lequel un matériau de construction est coulé sur chantier, tel que notamment du béton afin de former un mur définitif (non représenté). En outre, la hauteur H2 de la peau extérieure 2 est supérieure à la hauteur H3 de la peau intérieure 3 et par conséquent l'extrémité supérieure 23 de la peau extérieure 2 est saillante. Cet agencement délimite une zone de jonction horizontale 5 qui permet de recevoir l'extrémité d'une dalle D comme l'illustre la figure 2. Des moyens d'isolation 6a sont également disposés au niveau de l'extrémité supérieure 23 de la peau extérieure 2. Plus particulièrement, ces moyens d'isolation 6a sont intégrés dans la face extérieure 21 de la peau extérieure 2 et affleurent la face extérieure 21 de la peau extérieure 2 sans créer de surépaisseur. De cette façon, les moyens d'isolation sont disposés sur la face extérieure 21 du mur 1. Bien entendu, la présente invention n'est pas limitée à cet exemple, il serait envisageable que les moyens d'isolation 6a soient rapportés ou intégrés sur la face extérieure 21 de la peau extérieure 2 en surépaisseur. Dans l'exemple illustré, les moyens d'isolation 6a s'étendent sur toute la longueur L2 de la peau extérieure 2 et sur une hauteur prédéterminée H6a qui est inférieure à la hauteur H2 de la peau extérieure 2. La hauteur prédéterminée H6a des moyens d'isolation 6a est fonction de l'épaisseur Ed de la dalle D, mais n'est pas nécessairement égale à l'épaisseur de la dalle D. Au contraire, elle est de préférence légèrement supérieure pour déborder en dehors de la dalle D comme expliqué plus loin. Avantageusement, la surface S6a des moyens d'isolation 6a est inférieure à la surface totale S2 de la peau extérieure 2. Il en résulte que de tels moyens d'isolation 6a permettent de créer une rupture thermique uniquement au droit de la zone de jonction horizontale 5 et de limiter la rupture thermique à cette zone de jonction horizontale 5. Cette solution est économique car elle permet d'éviter l'usage d'un surplus de moyens d'isolation 6a en dehors de la zone de jonction horizontale 5, qui de surcroit n'améliorerait pas le coefficient thermique dudit mur ou de la construction.

Dans une autre variante de l'invention non représentée, le mur à coffrage intégré comporte des moyens d'isolation disposés dans le prolongement de l'extrémité supérieure de la peau extérieure. Plus précisément, les moyens d'isolation sont couplés et adjacents au bord de l'extrémité supérieure de la peau extérieure. Les moyens d'isolation peuvent également être disposés en partie sur la face extérieure de la peau extérieure, et se prolonger pour faire saillie de l'extrémité supérieure. De préférence, dans ce cas, les moyens d'isolation sont disposés sur un tiers de leur hauteur sur la face extérieure et dépasse de deux tiers de leur hauteur de l'extrémité supérieure. Dans tous, les cas, ils forment ainsi une portion saillante du mur à coffrage intégré qui délimite la zone de jonction horizontale et permet de recevoir l'extrémité d'une dalle. Il en résulte que les moyens d'isolation forment également un coffrage en prévision du coulage de dalle. Les moyens d'isolation permettent également de créer une rupture thermique dans cette zone de jonction. Avantageusement, une telle variante permet de fabriquer le mur à coffrage intégré à partir de deux peaux extérieure et intérieure ayant des hauteurs respectives sensiblement égales. De préférence, dans cette variante de réalisation, les moyens d'isolation sont maintenus à la peau extérieure par des connecteurs qui seront décrits plus en détail dans la suite de la description.

Des moyens d'isolation 6b peuvent également être disposés à l'extrémité inférieure 24 de la peau extérieure 2. Ces moyens d'isolation 6b sont également intégrés dans la face extérieure 21 de la peau extérieure 2 et affleurent la face extérieure 21 de la peau extérieure 2. De plus, ils s'étendent également sur toute la longueur L2 de la peau extérieure 2 et sur une hauteur prédéterminée H6b qui est inférieure à la hauteur H2 de la peau extérieure 2. Avantageusement, la surface S6b des moyens d'isolation 6b est inférieure à la surface totale S2 de la peau extérieure 2. Comme l'illustre la figure 2, ces moyens d'isolation 6b sont prévus pour prolonger les moyens d'isolation 6a disposés à l'extrémité supérieure 23 de la peau extérieure 2 d'un mur 1 sous-jacent. Il en résulte que les moyens d'isolation 6a et 6b de deux murs 1 sous-jacents se combinent et forment une isolation supérieure ou égale à l'épaisseur Ed de la dalle D comme l'illustre la figure 2. Par exemple, la hauteur totale des moyens d'isolation 6a et 6b est avantageusement sensiblement égale à 3 fois l'épaisseur Ed de la dalle D. Cet agencement procure une amélioration de la rupture thermique dans la zone de jonction horizontale 5 sur toute l'épaisseur Ed de la dalle D et de part et d'autre de la dalle D. Il est également possible d'omettre les moyens d'isolation 6b et de prévoir à leur place que les moyens d'isolation 6a dépassent de l'extrémité supérieure 23 de la peau extérieure 2. Dans ce cas de tels moyens d'isolation 6a permettent également de former un coffrage pour la dalle D. De préférence, les moyens d'isolation 6a et 6b présentent une forme de panneau parallélépipédique. En outre, le fait de positionner les moyens d'isolation 6a et 6b sur la face extérieure 21 de la peau extérieure 2 permet de ne pas modifier la structure ni le fonctionnement mécanique du mur 1 car les armatures 4 peuvent être prolongées dans la zone de jonction horizontale 5, comme l'illustre la figure 2, et être combinées à des armatures de liaison A. On choisira de préférence des moyens d'isolation 6a et 6b à base de matériaux cimentaires, résineux, silicocalcaires ou similaires qui avantageusement présentent des propriétés proches ou meilleures que du béton, en terme de dilatation thermique, dureté, absorption, et résistance au feu. Il en résulte que la combinaison de tels moyens d'isolation 6a, 6b sur la face extérieure 21 de la peau extérieure 2 forme une paroi mécaniquement homogène et cela même dans la zone de jonction horizontale 5. L'ajout de raidisseurs ou d'armatures de renfort supplémentaires n'est pas nécessaire comme c'est le cas dans l'art antérieur.

La figure 2 montre, en outre, le doublage isolant intérieur du bâtiment au moyen de plaques isolantes 8 disposées sur la face extérieure 31 de la peau intérieure 3 dudit mur 1. La dalle D peut être par ailleurs équipée d'un rupteur de pont thermique R s'étendant en périphérie et situé sensiblement dans le prolongement des plaques isolantes 8 assurant une continuité de l'isolation thermique intérieure. Ce mode de réalisation a l'avantage de montrer que le mur à coffrage intégré 1 selon l'invention est compatible d'une part avec des moyens d'isolation par l'intérieur, et d'autre part avec l'utilisation des rupteurs de pont thermique R disposés au niveau de la dalle D qui peut être préfabriquée ou coulée en place.

Bien entendu, les murs objets de l'invention peuvent comporter uniquement des moyens d'isolation 6a à l'extrémité supérieure 23 de la peau extérieure 2 ou uniquement des moyens d'isolation 6b à l'extrémité inférieure 24 de la peau extérieure 2 en fonction des besoins.

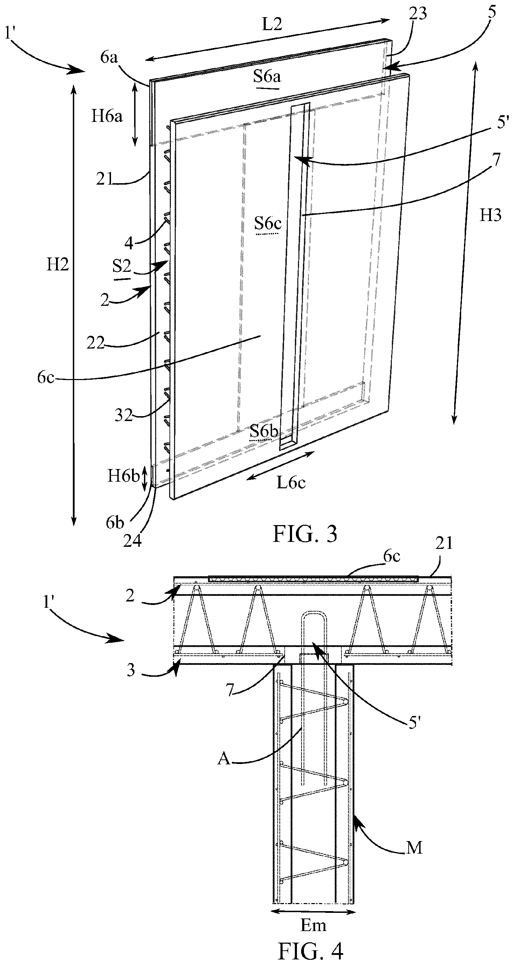

Dans une variante illustrée à la figure 3, le mur 1' est agencé à la fois pour recevoir une dalle D et un mur de refend M. A cet effet, le mur 1' est similaire au mur 1 de la première variante représentée aux figures 1 et 2 et comporte, en outre, une réservation 7 pouvant se présenter sous la forme d'une boite d'attente, et ménagée dans la peau intérieure 2. Cette réservation 7 présente une forme sensiblement quadrilatérale et s'étend longitudinalement dans une direction verticale. Elle permet de recevoir l'extrémité d'un mur de refend M, comme l'illustre la figure 4. Plus particulièrement, la réservation 7 est agencée pour comporter les armatures de liaison A du mur de refend M. Cette réservation 7 délimite une zone de jonction verticale 5'. Des moyens d'isolation 6c sont prévus sur la face extérieure 21 de la peau extérieure 2. Plus particulièrement, ces moyens d'isolation 6c sont intégrés dans la face extérieure 21 de la peau extérieure 2 et affleurent la face extérieure 21 de la peau extérieure 2. Ils s'étendent sur une longueur prédéterminée L6c qui est inférieure à la longueur L2 de la peau extérieure 2. La longueur prédéterminée L6c des moyens d'isolation 6c est fonction de l'épaisseur Em du mur de refend M, mais n'est pas nécessairement égale à celle-ci. En effet, la longueur prédéterminée L6c peut déborder de quelques centimètres de part et d'autre de l'épaisseur Em du mur de refend M. Par exemple, la longueur L6c des moyens d'isolation 6c est sensiblement égale à 2 à 3 fois l'épaisseur Em du mur de refend M. Comme représenté sur la figure 3, les moyens d'isolation 6c ne s'étendent pas sur toute la hauteur H2 de la peau extérieure 2 du fait de la présence des moyens d'isolation 6a et 6b pour isoler la zone de jonction horizontale 5. Ces moyens d'isolation 6a, 6b combinés aux moyens d'isolation 6c permettent la rupture thermique au droit à la fois des zones de jonction horizontale 5 et de la zone de jonction verticale 5'. Toutefois, l'invention n'est pas limitée à cet exemple et des moyens d'isolation 6c s'étendant sur toute la hauteur H2 de la peau extérieure 2 pourraient également être envisagés pour garantir la rupture thermique au droit de la zone de jonction verticale 5' uniquement. Avantageusement, la surface S6c des moyens d'isolation 6c est inférieure à la surface totale S2 de la peau extérieure 2.

De manière générale, les moyens d'isolation 6a, 6b, et 6c peuvent être continus ou discontinus. Ils peuvent être notamment constitués d'une ou de plusieurs plaques réalisées dans des matériaux en fibrociment, en composite ciment verre, en béton hautes et très hautes performances, en ciment allégé par des billes de polystyrène expansé, en fibres de bois et résine thermodurcissable, en perlite expansée additionnée de fibre et de liant, en polyester en résine et fibre de verre, en gypse et fibre, en silico-calcaire autoclavé incombustible ou une combinaison de ces matériaux selon le coefficient thermique à atteindre.

De préférence, les moyens d'isolation 6a, 6b, et 6c sont liés à la face extérieure 21 de la peau extérieure 2 par l'intermédiaire de connecteurs (non représentés) ou similaires, qui peuvent notamment être en matière plastique ou similaire, et peuvent être par exemple des profilés plastiques ou métalliques en forme de U ou en queue d'aronde sans que cet exemple ne soit limitatif. Les connecteurs peuvent être fixés mécaniquement et/ou rapportés par exemple par collage aux moyens d'isolation 6a, 6b, 6c. En outre, l'usage de connecteurs n'est pas systématique et dépend essentiellement de la nature des moyens d'isolation 6a, 6b, 6c. Dans certains cas, les moyens d'isolation 6a, 6b, 6c peuvent simplement être connectés à la peau extérieure 2 par adhérence au béton de la peau extérieure 2 et ne pas nécessiter de connecteurs. Dans ce sens, on pourra également prévoir une forme particulière des moyens d'isolation 6a, 6b, et 6c pour permettre un ancrage mécanique dans la face extérieure 21 de la peau extérieure 2.

La combinaison de ces différents moyens d'isolation 6a, 6b et 6c concourt à l'amélioration de l'isolation thermique dans la zone de jonction horizontale et/ou verticale 5, 5' voire à la suppression de tout pont thermique. En effet, le flux thermique qui tend à s'échapper par les zones de jonction horizontale et/ou verticale 5, 5' est fortement réduit par ces moyens d'isolation 6a, 6b et 6c. Cette isolation partielle est très avantageuse car elle permet d'une part une réduction importante des coûts d'isolation, du fait de la réduction de la quantité de matériaux isolants utilisés, tout en assurant une efficacité thermique optimale. Et d'autre part elle n'affecte quasiment pas le procédé usuel de fabrication. De plus, la résistance mécanique n'est pas modifiée par la présence des moyens d'isolation 6a, 6b et 6c du fait du choix de matériaux cimentaires et puisque l'armature métallique 4 est préservée. Ce choix de matériaux et cette configuration permet également de s'affranchir de tout problème d'étanchéité.

Le procédé de construction d'un bâtiment consiste en l'assemblage de murs 1, 1' selon l'invention constituant des murs porteurs, et de dalles D et/ou de murs de refend M.

### Possibilités d'application industrielle :

Il ressort clairement de cette description que l'invention permet d'atteindre les buts fixés, à savoir une très forte réduction du pont thermique au droit des dalles et/ou des murs de refend dans un bâtiment en utilisant une faible quantité de matériaux d'isolation et sans remettre en question ni le procédé de fabrication, ni les propriétés mécaniques desdits murs à coffrage intégrés 1, 1' préfabriqués.

La présente invention trouve une application industrielle dans le domaine de la construction de bâtiments aussi bien individuels que collectifs à partir d'éléments préfabriqués, et plus généralement dans le domaine des travaux publics et de tout type de construction.

La présente invention n'est pas limitée aux exemples de réalisation décrits mais s'étend à toute modification et variante évidentes pour un homme du métier.

## Revendications

1. Mur à coffrage intégré (1, 1') comportant une première paroi dite peau extérieure (2) et une seconde paroi dite peau intérieure (3), ladite peau extérieure (2) et ladite peau intérieure (3) étant sensiblement parallèles et maintenues à distance l'une de l'autre par au moins une armature de liaison (4) de préférence métallique, lesdites peaux extérieure (2) et intérieure (3) se faisant face par leur face intérieure (22, 32), la distance entre lesdites peaux extérieure (2) et intérieure (3) délimitant un espace agencé pour recevoir un matériau de construction coulé sur le chantier, ledit mur (1, 1') comportant au moins une zone de jonction horizontale (5) et/ou verticale (5') avec au moins un élément de construction, notamment une dalle (D) ou un mur de refend (M), ledit mur à coffrage intégré (1, 1') comportant en outre des moyens d'isolation (6a, 6b, 6c) agencés pour créer une rupture thermique au moins au droit de ladite zone de jonction horizontale (5) et/ou verticale (5'), **caractérisé en ce que** lesdits moyens d'isolation (6a, 6b, 6c) sont disposés sur la face extérieure dudit mur à coffrage intégré (1, 1'), s'étendent longitudinalement dans une direction horizontale et/ou dans une direction verticale, et sont répartis sur une surface (S6a, S6b, S6c) inférieure à la surface totale de ladite face extérieure dudit mur à coffrage intégré (1, 1') pour limiter ladite rupture thermique au droit de la zone de jonction horizontale (5) et/ou verticale (5').

2. Mur à coffrage intégré selon la revendication 1, **caractérisé en ce que** ledit mur à coffrage intégré (1, 1') comporte une portion saillante qui délimite ladite zone de jonction horizontale (5) agencée pour recevoir l'extrémité de la dalle (D).

3. Mur à coffrage intégré selon la revendication 2, **caractérisé en ce que** lesdits moyens d'isolation sont disposés dans le prolongement de l'extrémité supérieure (23) de ladite peau extérieure (2), sont couplés et adjacents au bord de l'extrémité supérieure de ladite peau extérieure (2), et forment ladite portion saillante dudit mur à coffrage intégré.

4. Mur à coffrage intégré selon l'une quelconque des revendications précédentes, **caractérisé en ce que** lesdits moyens d'isolation (6a, 6b, 6c) sont disposés au moins en partie sur la face extérieure (21) de ladite peau extérieure (2).

5. Mur à coffrage intégré selon la revendication 2, **caractérisé en ce que** la peau extérieure (2) présente une hauteur supérieure (H2) à la hauteur de la peau intérieure (H3) de sorte que son extrémité supérieure (23) forme ladite portion saillante agencée pour recevoir l'extrémité d'une dalle (D) et délimitant ladite zone de jonction horizontale (5), et **en ce que** ladite extrémité supérieure (23) saillante comporte des moyens d'isolation (6a) qui s'étendent sur une hauteur prédéterminée (H6a) inférieure à la hauteur (H2) de ladite peau extérieure (2).

6. Mur à coffrage intégré selon l'une quelconque des revendications précédentes, **caractérisé en ce que** l'extrémité inférieure (24) de la peau extérieure (2) comporte des moyens d'isolation (6b) qui s'étendent sur une hauteur (H6b) prédéterminée inférieure à la hauteur (H2) de ladite peau extérieure (2).

7. Mur à coffrage intégré selon l'une quelconque des revendications précédentes, **caractérisé en ce que** ladite peau intérieure (3) comporte une réservation (7) s'étendant longitudinalement dans une direction verticale agencée pour recevoir l'extrémité d'un mur de refend (M) et délimitant une zone de jonction verticale (5'), et **en ce que** la peau extérieure (2) comporte sur sa face extérieure (21) des moyens d'isolation (6c) qui s'étendent sur une longueur prédéterminée (L6c) inférieure à la longueur (L2) de ladite peau extérieure (2).

8. Mur à coffrage intégré selon la revendication 7, **caractérisé en ce que** lesdits moyens d'isolation (6c) de la zone de jonction verticale (5') s'étendent sur toute la hauteur (H2) de la peau extérieure (2).

9. Mur à coffrage intégré selon la revendication 7, **caractérisé en ce que** lesdits moyens d'isolation (6c) de la zone de jonction verticale (5') s'étendent sur une partie de la hauteur (H2) de la peau extérieure (2).

10. Mur à coffrage intégré selon l'une quelconque des revendications 1 à 6, **caractérisé en ce que** lesdits moyens d'isolation (6a, 6b) de la zone de jonction horizontale (5) s'étendent sur toute la longueur (L2) de la peau extérieure (2).

11. Mur à coffrage intégré selon la revendication 4, **caractérisé en ce que** lesdits moyens d'isolation (6a, 6b, 6c) sont rapportés sur la face extérieure (21) de ladite peau extérieure (2).

12. Mur à coffrage intégré selon la revendication 4, **caractérisé en ce que** lesdits moyens d'isolation (6a, 6b, 6c) sont intégrés au moins partiellement dans l'épaisseur de ladite peau extérieure (2).

13. Mur à coffrage intégré selon la revendication 12, **caractérisé en ce que** lesdits moyens d'isolation (6a, 6b, 6c) sont intégrés totalement dans l'épaisseur de ladite peau extérieure (2) et affleurent la face extérieure (21) de la peau extérieure (2).

14. Mur à coffrage intégré selon la revendication 13, **caractérisé en ce que** l'épaisseur desdits moyens d'isolation (6a, 6b, 6c) constitue sensiblement un tiers de l'épaisseur de ladite peau extérieure (2).

15. Mur à coffrage intégré selon l'une quelconque des revendications précédentes, **caractérisé en ce que** lesdits moyens d'isolation (6a, 6b, 6c) sont constitués d'au moins une plaque de matériaux isolants choisis dans le groupe comprenant des matériaux en fibrociment, en composite ciment verre, en béton hautes et très hautes performances, en ciment allégé par des billes de polystyrène expansé, en fibres de bois et résine thermodurcissable, en perlite expansée additionnée de fibre et de liant, en polyester en résine et fibre de verre, en gypse et fibre, en silico-calcaire autoclavé incombustible.

16. Mur à coffrage intégré selon l'une quelconque des revendications précédentes, **caractérisé en ce que** les moyens d'isolation (6a, 6b, 6c) sont liés à la face extérieure (21) de la peau extérieure (2) par l'intermédiaire de connecteurs.

17. Procédé de construction d'un bâtiment obtenu par l'assemblage de murs porteurs, de dalles (D) et/ou de murs de refend (M), **caractérisé en ce que**, pour fabriquer au moins une partie desdits murs porteurs, l'on utilise des murs à coffrage intégré (1, 1') selon l'une quelconque des revendications précédentes.

18. Bâtiment obtenu par l'assemblage de murs porteurs, de dalles (D) et/ou de murs de refend (M), **caractérisé en ce qu'**au moins une partie desdits murs porteurs comporte des murs à coffrage intégré (1, 1') selon l'une quelconque des revendications 1 à 16.

## Patentansprüche

1. Mauer mit integrierter Schalung (1, 1') mit einer ersten als Außenhaut (2) bezeichneten Wand und einer zweiten als Innenhaut (3) bezeichneten Wand, wobei besagte Außenhaut (2) und besagte Innenhaut (3) merklich parallel sind und durch eine vorzugsweise metallische Verbindungsbewehrung (4) auf Abstand voneinander gehalten werden, wobei die Innenseiten (22, 23) von besagter Außenhaut (2) und besagter Innenhaut (3) gegenüber liegen, wobei der Abstand zwischen besagter Außenhaut (2) und besagter Innenhaut (3) einen Raum begrenzt, der ausgelegt ist, um einen auf der Baustelle gegossenen Baustoff aufzunehmen, wobei besagte Mauer (1, 1') zumindest einen horizontalen (5) und/oder vertikalen (5') Verbindungsbereich mit zumindest einem Bauelement, insbesondere eine Platte (D) oder eine Zwischenwand (M) beträgt, wobei besagte Mauer mit integrierter Schalung (1, 1') zudem Isoliermittel (6a, 6b, 6c) beträgt, die ausgelegt sind, um eine thermische Trennung zumindest an besagtem horizontalen (5) und/oder vertikalen (5') Verbindungsbereich zu bilden, **dadurch gekennzeichnet, dass** besagte Isoliermittel (6a, 6b, 6c) auf der Außenseite von besagter Mauer mit integrierter Schalung (1, 1') angeordnet sind, sich längs in horizontaler und/oder vertikaler Richtung erstrecken, und auf einer Fläche (S6a, S6b, S6c) verteilt sind, die kleiner ist, als die Gesamtfläche von besagter Außenseite von besagter Mauer mit integrierter Schalung (1, 1'), um besagte thermische Trennung an dem horizontalen (5) und/oder vertikalen (5') Verbindungsbereich zu begrenzen.

2. Mauer mit integrierter Schalung nach Anspruch 1, **dadurch gekennzeichnet, dass** besagte Mauer mit integrierter Schalung (1, 1') einen herausragenden Teil beträgt, der besagten horizontalen Verbindungsbereich (5) begrenzt, der ausgelegt ist, um das Ende von Platte (D) aufzunehmen.

3. Mauer mit integrierter Schalung nach Anspruch 2, **dadurch gekennzeichnet, dass** besagte Isoliermittel in der Verlängerung des oberen Endes (23) von besagter Außenhaut (2) angeordnet sind, am Rand des oberen Endes von besagter Außenhaut (2) befestigt sind und anliegen, und besagten vom besagter Mauer mit integrierter Schalung herausragenden Teil bilden.

4. Mauer mit integrierter Schalung nach einem beliebigen der vorhergehenden Ansprüche, **dadurch gekennzeichnet, dass** besagte Isoliermittel (6a, 6b, 6c) zumindest teilweise auf der Außenseite (21) von besagter Außenhaut (2) angeordnet sind.

5. Mauer mit integrierter Schalung nach Anspruch 2, **dadurch gekennzeichnet, dass** die Außenhaut (2) eine Höhe (H2) aufweist, die größer ist, als Höhe (H3) der Innenhaut, so dass ihr oberes Ende (23) besagten herausragenden Teil bildet, der ausgelegt ist, um das Ende einer Platte (D) aufzunehmen und besagten horizontalen Verbindungsbereich (5) begrenzt, und dadurch, dass besagtes herausragendes oberes Ende (23) Isoliermittel (6a) beträgt, die sich auf einer vorbestimmten Höhe (H6a) erstrecken, die kleiner ist, als Höhe (H2) von besagter Außenhaut (2).

6. Mauer mit integrierter Schalung nach einem beliebigen der vorhergehenden Ansprüche, **dadurch gekennzeichnet, dass** das untere Ende (24) von Außenhaut (2) Isoliermittel (6b) beträgt, die sich auf einer vorbestimmten Höhe (H6b) erstrecken, die kleiner ist, als Höhe (H2) von besagter Außenhaut (2).

7. Mauer mit integrierter Schalung nach einem beliebigen der vorhergehenden Ansprüche, **dadurch gekennzeichnet, dass** besagte Innenhaut (3) eine Aussparung (7) beträgt, die sich längs in vertikaler Richtung erstreckt, ausgelegt ist, um das Ende einer Zwischenwand (M) aufzunehmen, und einen vertikalen Verbindungsbereich (5') begrenzt, und dadurch, dass Außenhaut (2) auf ihrer Außenseite (21) Isoliermittel (6c) beträgt, die sich auf einer vorbestimmten Länge (L6c) erstrecken, die kleiner ist, als Länge (L2) von besagter Außenhaut (2).

8. Mauer mit integrierter Schalung nach Anspruch 7, **dadurch gekennzeichnet, dass** besagte Isoliermittel (6c) von vertikalem Verbindungsbereich (5') sich auf der ganzen Höhe (H2) von Außenhaut (2) erstrecken.

9. Mauer mit integrierter Schalung nach Anspruch 7, **dadurch gekennzeichnet, dass** besagte Isoliermittel (6c) von vertikalem Verbindungsbereich (5') sich auf einem Teil der Höhe (H2) von Außenhaut (2) erstrecken.

10. Mauer mit integrierter Schalung nach einem beliebigen der Ansprüche 1 bis 6, **dadurch gekennzeichnet, dass** besagte Isoliermittel (6a, 6b) von horizontalem Verbindungsbereich (5) sich auf der ganzen Länge (L2) von Außenhaut (2) erstrecken.

11. Mauer mit integrierter Schalung nach Anspruch 4, **dadurch gekennzeichnet, dass** besagte Isoliermittel (6a, 6b, 6c) auf der Außenseite (21) von besagter Außenhaut (2) angebracht sind.

12. Mauer mit integrierter Schalung nach Anspruch 4, **dadurch gekennzeichnet, dass** besagte Isoliermittel (6a, 6b, 6c) zumindest teilweise in der Dicke von besagter Außenhaut (2) integriert sind.

13. Mauer mit integrierter Schalung nach Anspruch 12, **dadurch gekennzeichnet, dass** besagte Isoliermittel (6a, 6b, 6c) vollständig in der Dicke von besagter Außenhaut (2) integriert sind mit Außenseite (21) von Außenhaut (2) bündig sind.

14. Mauer mit integrierter Schalung nach Anspruch 13, **dadurch gekennzeichnet, dass** die Dicke von besagten Isoliermitteln (6a, 6b, 6c) merklich ein Drittel der Dicke von besagter Außenhaut (2) bildet.

15. Mauer mit integrierter Schalung nach einem beliebigen der vorhergehenden Ansprüche, **dadurch gekennzeichnet, dass** besagte Isoliermittel (6a, 6b, 6c) aus zumindest einer Platte aus Isolierstoffen bestehen, die in der Gruppe bestehend aus Materialien aus Faserzement, Zement-Glas-Verbundstoff, Beton mit hohen und sehr hohen Leistungen, Leichtbeton mit Styropor-Kügelchen, Holzfasern und wärmeaushärtendem Harz, expandiertem Perlit mit Fasern und Bindemittel, Polyester, Harz und Glasfasern, Gips und Fasern, feuerfestem autoklaviertem Kalksandstein gewählt werden.

16. Mauer mit integrierter Schalung nach einem beliebigen der vorhergehenden Ansprüche, **dadurch gekennzeichnet, dass** die Isoliermittel (6a, 6b, 6c) mit Hilfe von Verbindern mit Außenseite (21) von besagter Außenhaut (2) verbunden sind.

17. Bauverfahren für ein durch Zusammenbau von Tragwänden, Platten (D) und/oder Zwischenwänden (M) erhaltenes Gebäude, **dadurch gekennzeichnet, dass**, um zumindest ein Teil der besagten Tragwände herzustellen, man Mauern mit integrierter Schalung (1, 1') nach einem beliebigen der vorhergehenden Ansprüche einsetzt.

18. Durch Zusammenbau von Tragwänden, Platten (D) und/oder Zwischenwänden (M) erhaltenes Gebäude, **dadurch gekennzeichnet, dass** zumindest ein Teil der besagten Tragwände aus Mauern mit integrierter Schalung (1, 1') nach einem beliebigen der Ansprüche 1 bis 16 besteht.

## Claims

1. Integrated formwork wall (1, 1') comprising a first wall called outer skin (2) and a second wall called inner skin (3), said outer skin (2) and said inner skin (3) being substantially parallel and held at a distance from one another by at least one preferably metallic connecting reinforcement (4), said outer (2) and inner (3) skins facing each other with their inner sides (22, 32), the distance between said outer (2) and inner (3) skins delimiting a space arranged to receive a construction material poured on the worksite, said wall (1, 1') comprising at least one horizontal (5) and/or vertical (5') junction zone with at least one building element, in particular a slab (D) or a shear wall (M), said integrated formwork wall (1, 1') comprising moreover insulation means (6a, 6b, 6c) arranged to create a thermal break at least at said horizontal (5) and/or vertical (5') junction zone, **characterized in that** said insulation means (6a, 6b, 6c) are arranged on the outer side of said integrated formwork wall (1, 1'), extend longitudinally in a horizontal direction and/or in a vertical direction, and are distributed on a surface (S6a, S6b, S6c) smaller than the total surface of said outer side of said integrated formwork wall (1, 1') to limit said thermal break at the horizontal (5) and/or vertical (5') junction zone.

2. Integrated formwork wall according to claim 1, **characterized in that** said integrated formwork wall (1, 1') comprises a protruding section that delimits said horizontal junction zone (5) arranged to receive the end of slab (D).

3. Integrated formwork wall according to claim 2, **characterized in that** said insulation means are arranged in the extension of upper end (23) of said outer skin (2), are coupled and adjacent to the edge of the upper end of said outer skin (2) and form said protruding section of said integrated formwork wall.

4. Integrated formwork wall according to any of the previous claims, **characterized in that** said insulation means (6a, 6b, 6c) are arranged at least partly on the outer side (21) of said outer skin (2).

5. Integrated formwork wall according to claim 2, **characterized in that** outer skin (2) has a height (H2) larger than the height of inner skin (H3), so that its upper end (23) forms said protruding section arranged to receive the end of a slab (D) and delimiting said horizontal junction zone (5), and **in that** said protruding upper end (23) comprises insulation means (6a) that extend on a predetermined height (H6a) lower than height (H2) of said outer skin (2).

6. Integrated formwork wall according to any of the previous claims, **characterized in that** lower end (24) of outer skin (2) comprises insulation means (6b) that extend on a predetermined height (H6b) smaller than height (H2) of said outer skin (2).

7. Integrated formwork wall according to any of the previous claims, **characterized in that** said inner skin (3) comprises a recess (7) that extends longitudinally in a vertical direction, arranged to receive the end of a shear wall (M) and delimiting a vertical junction zone (5'), and **in that** outer skin (2) comprise on its outer side (21) insulation means (6c) that extend on a predetermined length (L6c) shorter than length (L2) of said outer skin (2).

8. Integrated formwork wall according to claim 7, **characterized in that** said insulation means (6c) of vertical junction zone (5') extend on the whole height (H2) of outer skin (2).

9. Integrated formwork wall according to claim 7, **characterized in that** said insulation means (6c) of vertical junction zone (5') extend on a part of height (H2) of outer skin (2).

10. Integrated formwork wall according to any of claims 1 to 6, **characterized in that** said insulation means (6a, 6b) of horizontal junction zone (5) extend on the whole length (L2) of outer skin (2).

11. Integrated formwork wall according to claim 4, **characterized in that** said insulation means (6a, 6b, 6c) are fastened on outer side (21) of said outer skin (2).

12. Integrated formwork wall according to claim 4, **characterized in that** said insulation means (6a, 6b, 6c) are integrated at least partly in the thickness of said outer skin (2).

13. Integrated formwork wall according to claim 12, **characterized in that** said insulation means (6a, 6b, 6c) are totally integrated in the thickness of said outer skin (2) and are flush with outer side (21) of outer skin (2).

14. Integrated formwork wall according to claim 13, **characterized in that** the thickness of said insulation means (6a, 6b, 6c) makes up substantially one third of the thickness of said outer skin (2).

15. Integrated formwork wall according to any of the previous claims, **characterized in that** said insulation means (6a, 6b, 6c) are made of at least one plate of insulating materials chosen in the group comprising materials out of fiber cement, glass-cement composite, high and very high-performance concrete, lightweight cement with expanded polystyrene beads, wood fibers and thermosetting resin, expanded perlite with fibers and a binding agent, polyester, resin and glass fibers, gypsum and fibers, fireproof autoclaved siliceous limestone.

16. Integrated formwork wall according to any of the previous claims, **characterized in that** said insulation means (6a, 6b, 6c) are fixed on outer side (21) of said outer skin (2) by means of fasteners.

17. Method for constructing a building obtained by assembling load-bearing walls, slabs (D) and/or shear walls (M), **characterized in that**, to manufacture at least a part of said load-bearing walls, one uses integrated formwork walls (1, 1') according to any of the previous claims.

18. Building obtained by assembling load-bearing walls, slabs (D) and/or shear walls (M), **characterized in that**, at least a part of said load-bearing walls comprises integrated formwork walls (1, 1') according to any of claims 1 to 16.
